(19) Europäisches Patentamt
European Patent Office
Office européen des brevets

(11) **EP 3 214 297 B1**

(12) **EUROPÄISCHE PATENTSCHRIFT**

(45) Veröffentlichungstag und Bekanntmachung des Hinweises auf die Patenterteilung:
**23.10.2019 Patentblatt 2019/43**

(51) Int Cl.:
*F02K 1/00* *(2006.01)*     *B63H 11/08* *(2006.01)*
*F02K 99/00* *(2009.01)*

(21) Anmeldenummer: **16158559.1**

(22) Anmeldetag: **03.03.2016**

(54) **STRAHLANTRIEB**

JET PROPULSION

PROPULSION PAR REACTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.09.2017 Patentblatt 2017/36**

(73) Patentinhaber: **Alpha Velorum AG**
**9495 Triesen (LI)**

(72) Erfinder: **ZIEGLER, Martin**
**CH-6422 Steinen (CH)**

(74) Vertreter: **Troesch Scheidegger Werner AG**
**Schwäntenmos 14**
**8126 Zumikon (CH)**

(56) Entgegenhaltungen:
**US-A- 1 879 812     US-A- 4 459 117**

**Beschreibung**

Die Erfindung betrifft eine Antriebsmaschine nach dem Oberbegriff des Anspruches 1 und ein Verfahren zur Erzeugung von Schub für eine Antriebsmaschine nach dem Oberbegriff des Anspruches 10.

Die Erfindung wird am Beispiel von Luftfahrtantrieben beschrieben.

Strahlantriebe nach dem Stand der Technik fördern Luft oder Wasser mit Hilfe eines Propulsors und erzeugen einen Strahl hoher Geschwindigkeit, der rückwärts gegen die Fahrtrichtung ausgestossen wird. Der Propulsor wird mit einer Antriebsmaschine angetrieben, z.B. mit einer Gasturbine, einem Verbrennungsmotor, oder einem Elektromotor. Nach der allgemeinen Strahltheorie ergibt sich eine Schubkraft aus der Differenz der Strömungsimpulse an den Bilanzgrenzen eines Strahlantriebs. Diese Theorie basiert auf den Kraftgesetzen von Newton, und so entsteht Schub als Reaktion auf Trägheitskräfte aus der Beschleunigung ruhender Fluide. Damit werden Fahrzeuge angetrieben.

Der Stand der Technik für Flugantriebe ist sehr umfassend beschrieben im Fachbuch "Flugzeugtriebwerke" von Willy J.G. Bräunling, Springer Verlag, 3. Auflage, 2009. Danach wächst die Schubkraft eines Strahlantriebs mit dem geförderten Massenstrom $\dot{m}$ und mit der Geschwindigkeitsdifferenz zwischen Zustrom und Abstrom des Antriebs. Der Zustrom erfolgt hier aus Fahrtrichtung mit Reisegeschwindigkeit $v$, und der Abstrom nach hinten mit Strahlgeschwindigkeit $c$. Nach der allgemeinen Strahltheorie ergibt sich die Schubkraft $F$ dann mit

$$F = \dot{m}(c - v) \qquad (\text{G01})$$

Bei konstantem Massenstrom und konstanter Strahlgeschwindigkeit nimmt der Schub nach Gleichung G01 mit zunehmender Reisegeschwindigkeit $v$ linear ab, weil die Geschwindigkeitsdifferenz der Strömungsimpulse sinkt. Bei $v = c$ wird der Schub zu Null, und die Funktion hat eine Nullstelle. Damit ein solches Triebwerk Schub liefern kann, muss der Strahl stets schneller sein als das Flugzeug, also $c > v$, und deshalb fliesst der Strahl mit $\Delta v = c - v$ über Grund stets rückwärts gegen die Fahrtrichtung. Damit transportiert er kinetische Energie, die als Verlust des Strahlantriebs abströmt.

Aus der US 1 879 812 ist eine Vorrichtung bekannt, bei welcher sich gekrümmte Kanäle von einem radialen Impeller zu einer Seitenfläche erstrecken. Einige der Kanäle umfassen Strömungsteiler, welche den entsprechenden Kanal von einem Impeller nahen Bereich bis zum Erreichen der Seitenfläche aufteilen.

Aufgabe der Erfindung ist die Bereitstellung einer verbesserten Vorrichtung und eines verbesserten Verfahrens zur Erzeugung einer Schubkraft, um Fahrzeuge anzutreiben. Eine weitere Aufgabe der Erfindung ist die Bereitstellung einer Vorrichtung und eines Verfahrens zur Erzeugung einer Schubkraft, wobei der Zustrom schneller sein kann als der Abstrom.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen. Das erfindungsgemässe Verfahren gemäß Anspruch 10 und die erfindungsgemässe Vorrichtung gemäß Anspruch 1 werden nachfolgend anhand von in den Zeichnungen schematisch dargestellten konkreten Ausführungsbeispielen zu einem "Flugzeugantrieb" rein beispielhaft näher beschrieben, wobei auch auf weitere Vorteile der Erfindung eingegangen wird:

Fig. 1:   Darstellung eines Strahlantriebs nach dem Stand der Technik mit Zustrom von vorne inklusive Schubfunktion mit Arbeitspunkt im Reiseflug.

Fig. 2:   Darstellung eines erfindungsgemässen Strahlantriebs.

Fig. 3:   Darstellung der Kraftübertragung im neuen Strahlantrieb.

Fig. 4:   Darstellung des neuen Strahlantriebs inklusive Schubfunktion mit Arbeitspunkt im Reiseflug.

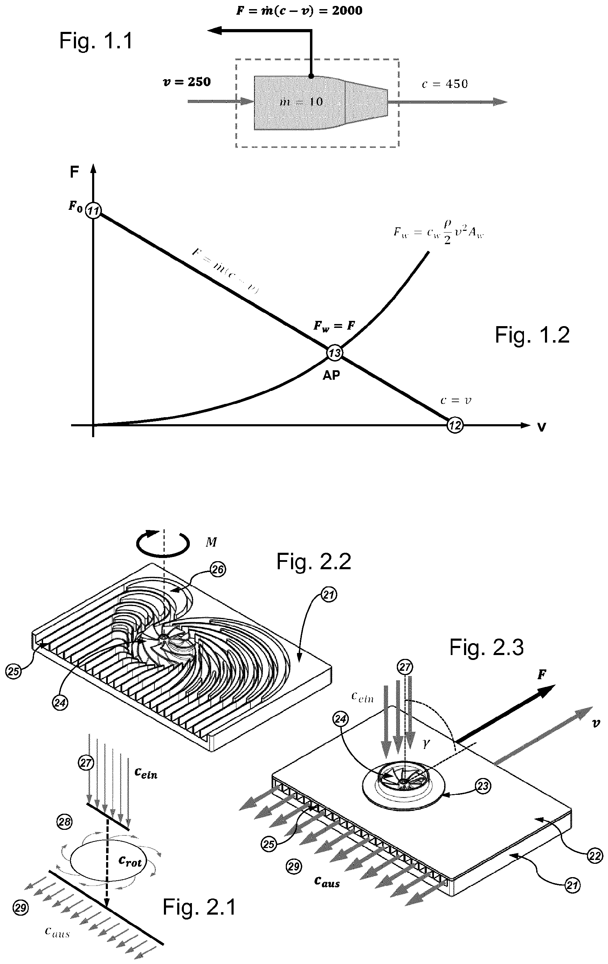

Figur 1 zeigt einen bekannten Strahlantrieb nach dem Stand der Technik. Im Beispiel nach Figur 1.1 strömen 10 kg Masse pro Sekunde durch das Triebwerk eines Flugzeugs, das 250 m/s schnell fliegt. Der Strahl verlässt das Triebwerk mit 450 m/s. Nach der allgemeinen Strahltheorie ergibt sich der Schub $F$ aus der Impulsbilanz mit:

$$F = 10\,\frac{kg}{s}\left(450\,\frac{m}{s} - 250\,\frac{m}{s}\right) = 2000\,N \qquad (\text{G02})$$

Der Strahl fliesst mit $\Delta v = c - v = 200\,\frac{m}{s}$ rückwärts über Grund. Damit transportiert er die Verlustleistung $P_v$:

$$P_v = \frac{1}{2} \dot{m} \Delta v^2 = \frac{1}{2} 10 \, \frac{kg}{s} \left( 450 \frac{m}{s} - 250 \frac{m}{s} \right)^2 = 200 \, kW \qquad (G03)$$

Figur 1.2 zeigt den Arbeitspunkt AP des Triebwerks im Zusammenspiel mit dem Widerstandskörper des Flugzeugs. Im Stand liefert das Triebwerk den Standschub $F_0$. Der Schub sinkt mit steigender Geschwindigkeit entsprechend der Schubgleichung. Das Flugzeug hat den Luftwiderstand $F_w$, der mit dem Quadrat der Geschwindigkeit wächst:

$$F_w = c_w \frac{\rho}{2} v^2 A_w \qquad (G04)$$

Das Flugzeug beschleunigt bis Schub und Luftwiderstand gleich sind, hier kreuzen sich die Kennlinien im Arbeitspunkt AP, und der stationäre Flugzustand ist erreicht. Die Darstellung zeigt drei ausgezeichnete Punkte:

11. Standschub

12. Nullstelle der Schubgleichung

13. Arbeitspunkt mit Gleichgewicht zwischen Schub und Widerstand

Nach diesem Schema arbeiten Strahlantriebe von Flugzeugen und Schiffen mit Strahltriebwerk oder mit Propeller. Hier wird ruhendes Fluid aus Fahrtrichtung kommend nach hinten beschleunigt, und der Schub entsteht nach Newton als Reaktion auf die Trägheitskräfte des beschleunigten Massenstroms.

Figur 2 zeigt nun das neue Prinzip aus der Erfindung.

Bei dem neuen Verfahren nach Figur 2.1 erfolgt der Zustrom (27) als linearer Impuls quer zur Fahrtrichtung. Dem Fluid wird nun Drehimpuls übertragen (28) mit Rotationsachse quer zur Fahrtrichtung. Dabei steigt die Strömungsenergie, aber es entsteht noch kein Schub. Zum Abschluss wird der Drehimpuls in einen Bahnimpuls transformiert, und der Abstrom fliesst als linearer Strömungsimpuls (29) nach hinten gegen die Fahrtrichtung. Bei der Transformation von Drehimpuls nach Bahnimpuls entsteht dann die Schubkraft *F* in Fahrtrichtung *v*.

Figur 2.2 zeigt die Vorrichtung von innen mit einem radialen Impeller (24), der in einem Gehäuse (21) mit Hilfe des Drehmoments M angetrieben wird (Motor ist nicht gezeigt). Die Rotationsachse des Impellers steht quer zur Fahrtrichtung. Das Gehäuse enthält eine Mehrzahl gekrümmter und am Ausgang an einer Seitenfläche des Gehäuses parallel angeordneter Kanäle (25), wobei aussen liegende Kanäle im Inneren Strömungsinseln (26) enthalten. Die Kanäle (25) sammeln die Strömung aus dem Impeller und lenken sie nach hinten um. Dabei entsteht Schub. Die Strömungsinseln (26) sind Teilungselemente mit fluiddynamischer Wirkung. Vorzugsweise erstrecken sich die Strömungsinseln über einen Abschnitt eines jeweiligen Kanals. Die Strömungsinseln können aus einer Draufsicht betrachtet sichelförmig oder tragflächenförmig ausgebildet sein.

Figur 2.3 zeigt die Vorrichtung von aussen. Das Gehäuse (21) hat eine Abdeckung (22), darin eingelassen ist der Einlauf (23) mit dem radialen Impeller (24). Der Antrieb des Impellers ist nicht dargestellt. Die Strömung fliesst dem Einlauf (Öffnung 23) mit Bahnimpuls (27) quer zur Fahrtrichtung zu und verlässt das Gehäuse (21) schräg zum Umfang des Impellers durch die Kanäle (25) mit Bahnimpuls (29) nach hinten gegen die Fahrtrichtung. Die Drehachse des Impellers steht quer zur Fahrtrichtung mit Winkel $\gamma$. Hier ist die Achse rechtwinklig zur Bewegungsrichtung dargestellt, sie kann aber bis 20 Grad gegen die Senkrechte geneigt sein ($\gamma$ = 70..**90..110** Grad zur Fahrtrichtung).

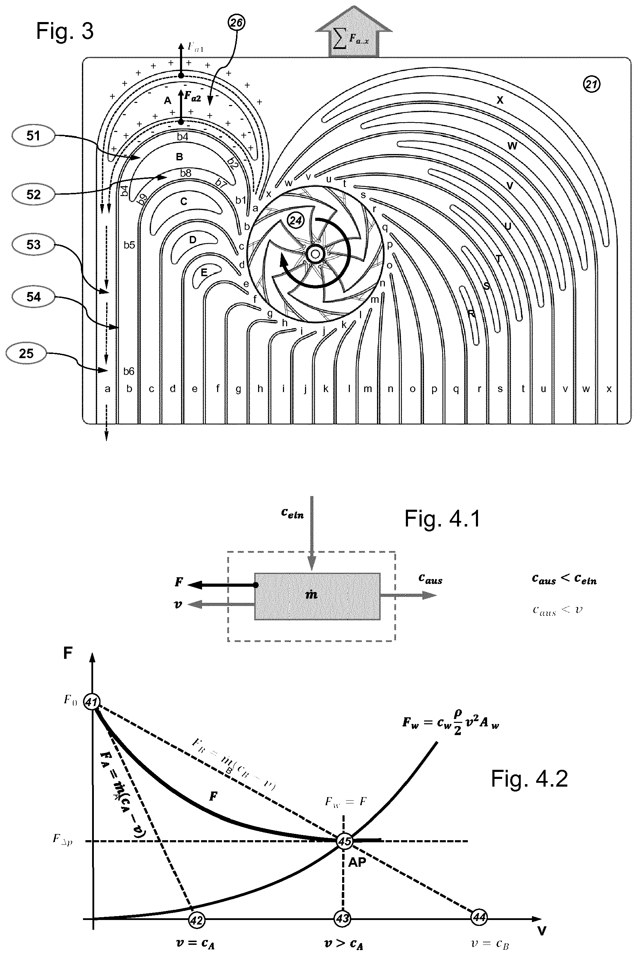

Figur 3 zeigt den Mechanismus der Kraftübertragung innerhalb der neuen Vorrichtung. Das Gehäuse (21) enthält eine Anzahl Kanäle (25) a bis x, die rings um den radialen Impeller (24) beginnen und am Gehäuseausgang parallel zur Fahrtrichtung auslaufen. Die aussen liegenden Kanäle enthalten separate Inseln (26), die umströmt werden können. Das Beispiel nach Figur 3 zeigt die Inseln A bis E und R bis X in den Kanälen a bis e und r bis x.

Die Strömung verlässt den Impeller und fliesst dann durch die Kanäle entlang von 9 Stationen (b1-b9). Alle Kanäle mit Inseln haben einen ersten vorderen Teilkanal (51) und einen zweiten hinteren Teilkanal (52). Die Teilkanäle gehen in einen parallelen Kanal (53) über, der das Fluid bis zum Ausgang transportiert. Die Kanäle sind durch Wände (54) voneinander getrennt. Die neun Stationen sind:

b1. Direkt hinter dem Impeller am Kanaleingang.

b2. Anfang erster Teilkanal (51).

b3. Mitte erster Teilkanal (51).

b4. Ende erster Teilkanal (51).

b5. Anfang Parallelkanal (53).

b6. Ausgang Parallelkanal (53).

b7. Anfang zweiter Teilkanal (52).

b8. Mitte zweiter Teilkanal (52).

b9. Ende zweiter Teilkanal (52).

Die Krümmung in den Teilkanälen bewirkt einen Überdruck (+) an den konkaven Wänden und einen Unterdruck (-) an den konvexen Wänden. So entsteht ein Druckgradient quer zur Strömung mit Kraftwirkung in Fahrtrichtung. Dargestellt sind die Kräfte $F_{a1}$ und $F_{a2}$ in den Teilkanälen $a_1$ und $a_2$. Die Druckverteilung an den Inseln entspricht auch der Druckverteilung an einer Tragfläche, die Unterseite hat Überdruck, die Oberseite hat Unterdruck, und so entstehen "Auftriebskräfte" im Inneren des Strömungsgehäuses.

Die Integration aller Druckkräfte an den Kanalwänden im Inneren des Gehäuses liefert dann den Schub für den Antrieb eines Fahrzeugs.

Bei dieser Vorrichtung entsteht der Schub nun nicht mehr aus Trägheitskräften infolge der Beschleunigung eines Massenstroms gegen die Fahrtrichtung. Vielmehr entsteht der Schub hier aus asymmetrisch wirkenden statischen Druckdifferenzen an der Innenseite von gekrümmten Kanalwänden. Das ist so ähnlich wie die Entstehung von Auftrieb an einer Tragfläche, die man "umkrempelt". Die Asymmetrie der Druckverteilung entsteht nicht an einer Aussenwand einer Tragfläche und einer Aussenströmung, sondern an der Innenwand eines Gehäuses und einer Innenströmung, was aus dem Stand der Technik nicht bekannt ist.

Beschrieben ist ein Verfahren zum Vortrieb von Fahrzeugen mit Hilfe eines Strahlantriebs, bei dem das Fluid aus der Umgebung quer zur Fahrtrichtung zuströmt, und bei dem die Antriebsenergie durch einen radialen Impeller übertragen wird, dessen Achse quer zur Fahrtrichtung steht, dadurch gekennzeichnet, dass das Fluid durch eine Anzahl gekrümmter Kanäle gefördert wird, deren Eingangsöffnungen radial um den Impeller verteilt sind, wobei die Kanäle am Ausgang parallel nebeneinander liegen und vorzugsweise in Fahrtrichtung ausgerichtet sind und das Fluid gegen die Fahrtrichtung ausstossen.

Insbesondere kann die Geschwindigkeit des Abstroms kleiner sein als die Geschwindigkeit des Zustroms und die Geschwindigkeit des Abstroms kann kleiner sein als die Reisegeschwindigkeit des Fahrzeugs.

Offenbart ist weiterhin, dass in dem Verfahren mehrere erfindungsgemässe Antriebsmaschinen vorhanden sein können, die gleichzeitig gemeinsam oder intermittierend einzeln oder in Gruppen arbeiten. An Oberflächen eines Fahrzeuges, wie beispielsweise eines Flugzeuges oder eines Luftkissenfahrzeuges, ist eine Mehrzahl an erfindungsgemässen Antriebsmaschinen angeordnet. Die Antriebsmaschinen können auf der besagten Fläche nach einem Rastermuster verteilt sein und in diverse Richtungen ausgerichtet sein. Durch eine individuelle Ansteuerung der einzelnen Antriebsmaschinen können beispielsweise in der Summe ein gewünschter Vorschub erzeugt oder Flugmanöver, wie Kurvenfahrten bzw. Kurvenflüge, erleichtert werden. Auch können erfindungsgemässe Antriebsmaschinen entgegen einer üblichen Fahrtrichtung ausgerichtet sein, um nach Bedarf als "Bremse" dienen zu können; damit liessen sich zum Beispiel Landebahnen auf Flughäfen verkürzen.

Die Antriebsmaschine kann entweder einzeln oder in Mehrzahl an einem Fahrzeug bezüglich zumindest einer Achse drehbar angeordnet sein. Damit wären erfindungsgemässe Antriebsmaschinen nicht unbedingt dediziert für eine Funktion (z.B. Bremsen, siehe oben), sondern können je nach Bedarf (Manöver, Schub, Bremsen, etc.) in eine beliebige Richtung verschwenkt werden.

Dazu kann ein Fahrzeug, insbesondere ein Flugzeug oder ein Luftkissenboot eine Mehrzahl an erfindungsgemässen Antriebsmaschinen aufweisen, welche an der Oberfläche des Fahrzeuges angeordnet ist, insbesondere wobei mindestens eine der Antriebsmaschinen vermittels wenigstens eines Schwenkmotors in mindestens einer Achse drehbar ausgebildet ist. Darüber hinaus kann das Fahrzeug eine Steuereinheit zur individuellen Ansteuerung und Koordinierung der Antriebsmaschinen aufweisen, insbesondere zur Ansteuerung des mindestens einen Schwenkmotors.

Die Erfindung betrifft weiterhin ein Verfahren, in welchem weiterhin der Antrieb erst nach Erreichen einer Mindestgeschwindigkeit eingeschaltet wird.

Die Erfindung betrifft weiterhin eine Vorrichtung zur Umsetzung des beschriebenen Verfahrens, wobei ein radialer Impeller mit Rotationsachse quer zur Fahrtrichtung in ein Gehäuse mit Deckel und Einlauf eingelassen ist, wobei das Gehäuse mehrere gekrümmte Kanäle enthält, deren Anfang rings um den Impeller verteilt angeordnet ist, und deren Ende als gerader Kanalabschnitt ausgeführt ist, der vom Nachbarkanal durch eine gerade Wand getrennt ist, wobei alle Kanäle am Ausgang nebeneinander liegen und parallel ausgerichtet sind.

Die Erfindung betrifft eine Antriebsmaschine zum Fahrzeugantrieb in einem Fluid, insbesondere Luft oder Wasser, mit einem radialen Impeller 24 mit einer Rotationsachse, einem Motor zum Antrieb des Impellers, und einem Gehäuse 21, wobei der Impeller in dem Gehäuse gelagert ist, und wobei das Gehäuse an einer ersten Seitenfläche eine Öffnung 23 aufweist, welche konzentrisch zur Rotationsachse angeordnet ist, wobei das Gehäuse in seinem Inneren Kanäle aufweist, welche sich vom Umfang des Impellers bis zu einer zweiten Seitenfläche des Gehäuses erstrecken, an welcher die Kanäle in die Umgebung münden, wobei mindestens ein Kanal eine Strömungsinsel 26 als fluiddynamisches Teilungselement zur zumindest abschnittsweisen Teilung des jeweiligen Kanals in zwei Zweige aufweist und wobei die zwei Zweige beabstandet zur zweiten Seitenfläche wieder zusammengeführt sind.

In einer weiteren Ausführungsform der Erfindung sind die Kanäle so ausgestaltet und angeordnet, dass sie im Inneren des Gehäuses - am Umfang des Impellers verteilt - schräg zum Umfang des Impellers von dem Impeller wegführen, und an der zweiten Seitenfläche parallel nebeneinander in die Umgebung münden.

In einer weiteren Ausführungsform der Erfindung sind die erste Seitenfläche und die zweite Seitenfläche relativ zueinander schräg, insbesondere rechtwinklig zu einander angeordnet.

In einer weiteren Ausführungsform der Erfindung sind die zweite Seitenfläche und die Rotationsachse relativ zueinander schräg, insbesondere in einem Winkel zwischen 70° und 110°, insbesondere in einem Winkel von 90° zu einander angeordnet.

In einer weiteren Ausführungsform der Erfindung weist ein Anteil zwischen 10% und 40%, insbesondere von 25% der äusseren an der zweiten Seitenfläche mündenden Kanäle eine Strömungsinsel auf.

In einer weiteren Ausführungsform der Erfindung weist ein erstes Ende des Impellers, welches an der Öffnung an der ersten Seitenfläche des Gehäuses angeordnet ist, einen kleineren Durchmesser auf, als ein zweites Ende des Impellers, an dessen Umfang im Inneren des Gehäuses die Kanäle vom Impeller wegführen.

In einer weiteren Ausführungsform der Erfindung weist die mindestens eine Strömungsinsel - in einer Draufsicht entlang der Rotationsachse des Impellers - eine sichelähnliche Form auf.

In einer weiteren Ausführungsform der Erfindung weisen die Kanäle - in einer Draufsicht entlang auf.

In einer weiteren Ausführungsform der Erfindung ist jede Strömungsinsel in der Mitte zwischen zwei Wänden eines entsprechenden Kanals angeordnet.

Die Erfindung betrifft weiterhin ein Verfahren zur Erzeugung von Schub für eine Antriebsmaschine, mit den Schritten:

Einströmen eines Fluidmassenstroms durch eine Öffnung eines Gehäuses in einen radialen Impeller, wobei sich die Öffnung an einer ersten Seitenfläche des Gehäuses befindet, und wobei der Impeller in dem Gehäuse drehbar um eine Rotationsachse gelagert ist und von einem Motor angetrieben wird,

Radialbeschleunigung des Fluidmassenstroms durch den Impeller,

Einströmen des Fluidmassenstroms in Kanäle, welche im Gehäuse angeordnet sind und vom Umfang des Impellers wegführen,

Aufteilen des Fluidmassenstroms in mindestens einem der Kanäle, wobei das Aufteilen abschnittsweise durch eine in der Mitte zwischen zwei Wänden eines entsprechenden Kanals angeordnete Strömungsinsel als fluiddynamisches Teilungselement erfolgt,

Erzeugen eines Überdruckes an einer ersten Seitenfläche der mindestens einen Strömungsinsel durch Anströmung der Strömungsinsel mit dem Fluidmassenstrom,

Erzeugen eines Unterdruckes an einer zweiten Seitenfläche der mindestens einen Strömungsinsel durch Anströmung der Strömungsinsel mit dem Fluidmassenstrom,

Zusammenführen des Fluidmassenstroms im mindestens einen der Kanäle, wobei das Zusammenführen beabstandet zu einer zweiten Seitenfläche erfolgt,

Ausströmen des Fluidmassenstroms aus Mündungen der Kanäle, wobei die Mündungen an einer zweiten Seitenfläche des Gehäuses parallel nebeneinander, und insbesondere in einer Ebene, angeordnet sind.

In einer weiteren Ausführungsform der Erfindung weist die mindestens eine Strömungsinsel - in einer Draufsicht entlang der Rotationsachse des Impellers - eine sichelähnliche Form auf. Erfindungsgemäss kann jede Strömungsinsel in der Mitte eines entsprechenden Kanals angeordnet sein.

In einer weiteren Ausführungsform der Erfindung resultieren der Überdruck und der Unterdruck an einer entsprechenden Strömungsinsel zu einer Kraft, welche quer zu einer Längsrichtung der Strömungsinsel wirkt.

In einer weiteren Ausführungsform der Erfindung weist ein Anteil zwischen 10% und 40%, insbesondere von 25% der äusseren an der zweiten Seitenfläche mündenden Kanäle eine Strömungsinsel auf. Erfindungsgemäss die Kanäle - in einer Draufsicht entlang der Rotationsachse des Impellers - einen gekrümmten Verlauf aufweisen.

In einer weiteren Ausführungsform der Erfindung weist die mindestens eine Strömungsinsel - in einer Draufsicht entlang der Rotationsachse des Impellers - eine sichelähnliche Form auf. Erfindungsgemäss kann jede Strömungsinsel in der Mitte eines entsprechenden Kanals angeordnet sein.

In einer weiteren Ausführungsform der Erfindung weist ein erstes Ende des Impellers, welches an der Öffnung an der ersten Seitenfläche des Gehäuses angeordnet ist, einen kleineren Durchmesser auf, als ein zweites Ende des Impellers, an dessen Umfang im Inneren des Gehäuses die Kanäle wegführen.

Ein Ausführungsbeispiel der Vorrichtung kann ein oder mehrere umströmte Inseln haben, die zwischen durchströmten Teilkanälen liegen. Der Winkel zwischen Drehachse des Impellers und Fahrtrichtung kann vorzugsweise 70 bis 110 Grad betragen.

Die durchströmte Fläche des Einlaufs ist insbesondere kleiner, als die Flächensumme der Auslassöffnung aller Kanäle.

In einer weiteren Ausführungsform der erfindungsgemässen Vorrichtung ist das Gehäuse in die Wand eines Fahrzeugs eingelassen oder darauf aufgesetzt, und seine Form folgt insbesondere der Aussenhautkrümmung des Fahrzeugs. Der Impeller kann vorzugsweise elektrisch angetrieben werden. Mehrere erfindungsgemässe Vorrichtungen können mit einer gemeinsamen Steuerung verbunden und auf einander abgestimmt sein.

Weiterhin kann die Vorrichtung, insbesondere in einer Mehrzahl, punktförmig, linienförmig, oder flächenhaft in einem regelmässigen oder unregelmässigen Raster auf der Oberfläche eines Fahrzeugs verteilt angeordnet sind.

Vorteilhaft bei diesem Verfahren ist, dass die statische Druckverteilung im Inneren des Gehäuses nur von der Strömungsgeschwindigkeit und der Kanalkrümmung abhängt und nicht von der Fluggeschwindigkeit $v$. Daraus ergibt sich eine völlig andere Schubcharakteristik als bisher, und die Schubfunktion hat keine Nullstelle mehr.

Vorteilhaft ist auch, dass Zustrom und Abstrom unabhängig voneinander entworfen werden können, und dass der Abstrom sogar langsamer sein kann als der Zustrom. Damit kann man die Verlustenergie reduzieren und Energie sparen.

Figur 4 zeigt hierzu das experimentell gemessene Schubverhalten des neuen Antriebs sowie das Schema der Impulsbilanz.

Figur 4.1 zeigt das Schema des neuen Strahlantriebs mit einer Eingangsströmung $c_{sin}$ und einer Ausgangsströmung $c_{aus}$. Die Ausgangsströmung ist hier langsamer als die Reisegeschwindigkeit und langsamer als die Eingangsströmung dargestellt. Das ist mit herkömmlichen Triebwerken nicht möglich.

Figur 4.2 zeigt das Schubverhalten des Triebwerks im Zusammenspiel mit dem Strömungswiderstand eines Fahrzeugs. Auch hier gilt, dass der Antrieb das Fahrzeug bis zum Arbeitspunkt AP beschleunigt, dann sind Schub und Widerstand im Gleichgewicht. Zwischen Stillstand und Gleichgewicht verläuft der Schub nun nicht mehr linear, sondern die Kurvensteigung nimmt ab. Die Schubkurve schneidet die Widerstandslinie mit einer horizontalen Tangente, und es gibt keine Nullstelle mehr. Das liegt am Mechanismus der Kraftübertragung durch interne statische Druckkräfte $F_{\Delta p}$ unabhängig von der Reisegeschwindigkeit. Das Diagramm enthält fünf ausgezeichnete Punkte:

41. Standschub mit Kurvensteigung wie ein herkömmliches Triebwerk A.

42. Nullstelle eines Referenztriebwerks A.

43. Geschwindigkeit im Arbeitspunkt AP.

44. Nullstelle eines Referenztriebwerks B mit Arbeitspunkt AP.

45. Arbeitspunkt AP.

Die Darstellung zeigt, dass ein herkömmliches Referenztriebwerk A maximal die Geschwindigkeit seiner Nullstelle erreichen kann $v_{max} = c_A$. Diese liegt deutlich unter der Geschwindigkeit des Arbeitspunktes AP. Sie zeigt auch, dass ein herkömmliches Triebwerk B den Arbeitspunkt AP nur mit Strahlgeschwindigkeit $v = c_B$ erreichen kann. Diese liegt deutlich über der Geschwindigkeit im Arbeitspunkt AP.

Der neue Strahlantrieb kann den gewünschten Arbeitspunkt mit einer geringeren Strahlgeschwindigkeit erreichen als bekannte Triebwerke. Das spart Treibstoff.

Weil der Zustrom quer zur Fahrtrichtung steht, und weil das Gehäuse (21) flach ausgeführt ist, kann man den Antrieb in die Wand eines Fahrzeugs einbauen, beispielsweise in die Rumpfwand eines Flugzeugs oder eines Schiffes, oder in eine Tragfläche. Für gekrümmte Wände muss man das Gehäuse anpassen.

Die neuen Triebwerke werden vorzugsweise elektrisch angetrieben. Sie können einzeln oder paarweise angeordnet sein, oder auch in einem regelmässigen Raster oder unregelmässigen Muster in die Aussenhülle eines Fahrzeugs eingelassen werden oder aufgesetzt sein.

Sie können für verschiedene Aufgaben eingesetzt werden:

1. Start - Betrieb nur beim Start.

2. Reise - Betrieb während der ganzen Reise.

3. Sparmodus - Betrieb nur ab einer bestimmten Reisegeschwindigkeit

4. Manöver - Betrieb zur Unterstützung von Flug- und Fahrmanövern

Geometrisch sind punktförmige Anordnungen, linienförmige Ketten, und flächenhafte Raster möglich. Bei Einsatz von mehreren Triebwerken können die Antriebe individuell oder in Gruppen gesteuert werden. Damit kann man Fahrmanöver unterstützen.

Ein Sparmodus ist möglich, wenn das neue Triebwerk Schub erst ab einer Reisegeschwindigkeit oberhalb seiner Strahlgeschwindigkeit erzeugt. Dann kann es vorhandene Triebwerke entlasten und Treibstoff sparen. Für diese Anwendung können Fahrzeuge auch nachgerüstet werden.

Es versteht sich, dass die vorangehend gezeigten und erklärten Figuren nur mögliche Ausführungsbeispiele schematisch darstellen. Insbesondere wird darauf hingewiesen, dass die explizit dargestellten und erklärten Beispiele ausnahmslos sowohl separat voneinander als auch in jeglicher Kombination miteinander einsetzbar sowie auch mit entsprechenden Vorrichtungen und Verfahren des Stands der Technik kombinierbar sind.

**Patentansprüche**

1.  Antriebsmaschine zum Fahrzeugantrieb in einem Fluid, insbesondere Luft oder Wasser, mit

    • einem radialen Impeller (24) mit einer Rotationsachse,
    • einem Motor zum Antrieb des Impellers, und
    • einem Gehäuse (21),

    wobei der Impeller in dem Gehäuse gelagert ist, und wobei das Gehäuse an einer ersten Seitenfläche eine Öffnung (23) aufweist, welche konzentrisch zur Rotationsachse angeordnet ist,
    wobei das Gehäuse in seinem Inneren Kanäle aufweist, welche sich vom Umfang des Impellers bis zu einer zweiten Seitenfläche des Gehäuses erstrecken, an welcher die Kanäle in die Umgebung münden,
    **dadurch gekennzeichnet, dass**
    mindestens ein Kanal eine Strömungsinsel (26) als fluiddynamisches Teilungselement zur zumindest abschnittsweisen Teilung des jeweiligen Kanals in zwei Zweige aufweist, und dass
    die zwei Zweige beabstandet zur zweiten Seitenfläche wieder zusammengeführt sind.

2.  Antriebsmaschine nach Anspruch 1,
    wobei die Kanäle so ausgestaltet und angeordnet sind, dass sie

    • im Inneren des Gehäuses - am Umfang des Impellers verteilt - schräg zum Umfang des Impellers von dem Impeller wegführen, und
    • an der zweiten Seitenfläche parallel nebeneinander in die Umgebung münden.

3.  Antriebsmaschine nach einem der Ansprüche 1 bis 2,
    wobei die erste Seitenfläche und die zweite Seitenfläche relativ zueinander schräg, insbesondere rechtwinklig zu einander angeordnet sind.

4.  Antriebsmaschine nach einem der Ansprüche 1 bis 3,
    wobei die zweite Seitenfläche und die Rotationsachse relativ zueinander schräg, insbesondere in einem Winkel zwischen 70° und 110°, insbesondere in einem Winkel von 90° zu einander angeordnet sind.

5.  Antriebsmaschine nach einem der Ansprüche 2 bis 4,

wobei ein Anteil zwischen 10% und 40%, insbesondere von 25% der äusseren an der zweiten Seitenfläche mündenden Kanäle eine Strömungsinsel aufweisen.

6. Antriebsmaschine nach einem der Ansprüche 1 bis 5,
   wobei ein erstes Ende des Impellers, welches an der Öffnung an der ersten Seitenfläche des Gehäuses angeordnet ist, einen kleineren Durchmesser aufweist, als ein zweites Ende des Impellers, an dessen Umfang im Inneren des Gehäuses die Kanäle vom Impeller wegführen.

7. Antriebsmaschine nach einem der Ansprüche 1 bis 6,
   wobei die mindestens eine Strömungsinsel - in einer Draufsicht entlang der Rotationsachse des Impellers - eine sichelähnliche Form aufweist.

8. Antriebsmaschine nach einem der Ansprüche 1 bis 7,
   wobei die Kanäle - in einer Draufsicht entlang der Rotationsachse des Impellers - einen gekrümmten Verlauf aufweisen.

9. Antriebsmaschine nach einem der Ansprüche 1 bis 8, wobei jede Strömungsinsel in der Mitte zwischen zwei Wänden eines entsprechenden Kanals angeordnet ist.

10. Verfahren zur Erzeugung von Schub für eine Antriebsmaschine, mit den Schritten:

   • Einströmen eines Fluidmassenstroms durch eine Öffnung eines Gehäuses in einen radialen Impeller, wobei sich die Öffnung an einer ersten Seitenfläche des Gehäuses befindet, und
   wobei der Impeller in dem Gehäuse drehbar um eine Rotationsachse gelagert ist und von einem Motor angetrieben wird,
   • Radialbeschleunigung des Fluidmassenstroms durch den Impeller,
   • Einströmen des Fluidmassenstroms in Kanäle, welche im Gehäuse angeordnet sind und vom Umfang des Impellers wegführen,
   • Aufteilen des Fluidmassenstroms in mindestens einem der Kanäle, wobei das Aufteilen abschnittsweise durch eine in der Mitte zwischen zwei Wänden eines entsprechenden Kanals angeordnete Strömungsinsel als fluiddynamisches Teilungselement erfolgt,
   • Erzeugen eines Überdruckes an einer ersten Seitenfläche der mindestens einen Strömungsinsel durch Anströmung der Strömungsinsel mit dem Fluidmassenstrom,
   • Erzeugen eines Unterdruckes an einer zweiten Seitenfläche der mindestens einen Strömungsinsel durch Anströmung der Strömungsinsel mit dem Fluidmassenstrom,
   • Zusammenführen des Fluidmassenstroms im mindestens einen der Kanäle, wobei das Zusammenführen beabstandet zu einer zweiten Seitenfläche erfolgt,
   • Ausströmen des Fluidmassenstroms aus Mündungen der Kanäle, wobei die Mündungen an der zweiten Seitenfläche des Gehäuses parallel nebeneinander, und insbesondere in einer Ebene, angeordnet sind.

11. Verfahren nach Anspruch 10,
   wobei die mindestens eine Strömungsinsel - in einer Draufsicht entlang der Rotationsachse des Impellers - eine sichelähnliche Form aufweist und/oder wobei jede Strömungsinsel in der Mitte zwischen zwei Wänden eines entsprechenden Kanals angeordnet ist.

12. Verfahren nach einem der Ansprüche 10 bis 11,
   wobei der Überdruck und der Unterdruck an einer entsprechenden Strömungsinsel zu einer Kraft resultieren, welche quer zu einer Längsrichtung der Strömungsinsel wirkt.

13. Verfahren nach einem der Ansprüche 10 bis 12,
   wobei ein Anteil zwischen 10% und 40%, insbesondere von 25% der äusseren an der zweiten Seitenfläche mündenden Kanäle eine Strömungsinsel aufweist, und/oder wobei die Kanäle - in einer Draufsicht entlang der Rotationsachse des Impellers - einen gekrümmten Verlauf aufweisen.

14. Verfahren nach einem der Ansprüche 10 bis 12,
   wobei die mindestens eine Strömungsinsel - in einer Draufsicht entlang der Rotationsachse des Impellers - eine sichelähnliche Form aufweist und/oder wobei jede Strömungsinsel in der Mitte zwischen zwei Wänden eines entsprechenden Kanals angeordnet ist.

**15.** Fahrzeug, insbesondere Luftfahrzeug, mit

   • wenigstens zwei Antriebsmaschinen nach einem der Ansprüche 1 bis 9, welche an einer Oberfläche des Fahrzeuges angeordnet sind, insbesondere wobei mindestens eine der Antriebsmaschinen vermittels wenigstens eines Schwenkmotors in mindestens einer Achse drehbar ausgebildet ist,
   • einer Steuereinheit zur individuellen Ansteuerung und Koordinierung der Antriebsmaschinen, insbesondere zur Ansteuerung des mindestens einen Schwenkmotors.

**Claims**

**1.** Drive machine for driving a vehicle in a fluid, in particular air or water, having

   • a radial impeller (24) with an axis of rotation,
   • a motor to drive the impeller, and
   • a housing (21),

wherein the impeller is mounted in the housing, and wherein the housing has an opening (23) on a first side surface which is arranged concentrically to the axis of rotation,
wherein in its interior the housing has channels extending from the circumference of the impeller to a second side surface of the housing on which the channels open into the environment,
**characterized in that**
at least one channel has a flow island (26) as a fluid-dynamic dividing element for dividing the respective channel into two branches at least in sections, and **in that**
the two branches are brought together again at a distance from the second side surface.

**2.** Drive machine according to claim 1,
wherein the channels are configured and arranged so that they

   • lead away from the impeller in the interior of the housing - distributed around the circumference of the impeller - at an angle to the circumference of the impeller, and
   • open at the second side surface parallel next to each other into the environment.

**3.** Drive machine according to one of claims 1 to 2, wherein the first side surface and the second side surface are arranged obliquely relative to one another, in particular at right angles to one another.

**4.** Drive machine according to one of claims 1 to 3, wherein the second side surface and the axis of rotation are arranged obliquely relative to one another, in particular at an angle between 70° and 110°, in particular at an angle of 90° to one another.

**5.** Drive machine according to one of claims 2 to 4, wherein a proportion between 10% and 40%, in particular 25%, of the outer channels opening at the second side surface have a flow island.

**6.** Drive machine according to one of the claims 1 to 5, wherein a first end of the impeller arranged at the opening on the first side surface of the housing has a smaller diameter than a second end of the impeller, at the circumference of which in the interior of the housing the channels lead away from the impeller.

**7.** Drive engine according to one of claims 1 to 6, wherein the at least one flow island - as viewed in a plan view along the axis of rotation of the impeller - has a sickle-like shape.

**8.** Drive machine according to one of claims 1 to 7, wherein the channels - as viewed in a plan view along the axis of rotation of the impeller - have a curved shape.

**9.** Drive machine according to one of claims 1 to 8, wherein each flow island is arranged in the middle between two walls of a corresponding channel.

**10.** Method for generating thrust for a driving machine, comprising the steps of:

• inflow of a fluid mass flow through an opening of a housing into a radial impeller, wherein the opening is located on a first side surface of the housing, and wherein the impeller is rotatably mounted in the housing about an axis of rotation and is driven by a motor,

• radial acceleration of the fluid mass flow through the impeller,

• inflow of the fluid mass flow into channels which are arranged in the housing and lead away from the circumference of the impeller,

• division of the fluid mass flow in at least one of the channels, wherein the division takes place in sections by a flow island arranged in the middle between two walls of a corresponding channel as a fluid-dynamic division element,

• generation of an overpressure on a first side surface of the at least one flow island by the inflow of the fluid mass flow to the flow island,

• generation of a negative pressure on a second side surface of the at least one flow island by the flow of the fluid mass flow to the flow island,

• combining the fluid mass flow in at least one of the channels, wherein the combining occurs at a distance from a second side surface,

• outflow of the fluid mass flow from orifices of the channels, wherein the orifices are arranged parallel to one another, and in particular in one plane, on the second side surface of the housing.

11. Method according to claim 10, wherein the at least one flow island - as viewed in a plan view along the axis of rotation of the impeller - has a sickle-like shape and/or wherein each flow island is arranged in the middle between two walls of a corresponding channel.

12. Method according to one of claims 10 to 11, wherein the overpressure and the negative pressure at a respective flow island result in a force acting transversely to a longitudinal direction of the flow island.

13. Method according to one of claims 10 to 12, wherein a proportion of between 10% and 40%, in particular of 25%, of the outer channels opening at the second side surface comprises a flow island, and/or wherein the channels - as viewed in a plan view along the axis of rotation of the impeller - have a curved course.

14. Method according to one of the claims 10 to 12, wherein the at least one flow island - as viewed in a plan view along the axis of rotation of the impeller - has a sickle-like shape, and/or
wherein each flow island is arranged in the middle between two walls of a corresponding channel.

15. Vehicle, in particular aircraft, having

• at least two drive machines according to one of claims 1 to 9, which are arranged on a surface of the vehicle, in particular wherein at least one of the drive machines is designed to be rotatable in at least one axis by means of at least one swivel motor,

• a control unit for individually controlling and coordinating the drive machines, in particular for controlling the at least one swivel motor.

## Revendications

1. Groupe propulseur pour la propulsion de véhicules dans un fluide, en particulier l'air ou l'eau, comprenant

- une turbine radiale (24) avec un axe de rotation,
- un moteur pour entraîner la turbine, et
- un boîtier (21),

dans lequel la turbine est montée dans le boîtier, et dans lequel le boîtier présente sur une première surface latérale une ouverture (23) qui est agencée de façon concentrique par rapport à l'axe de rotation,
dans lequel le boîtier présente à l'intérieur des canaux qui s'étendent depuis le pourtour de la turbine jusqu'à une deuxième surface latérale du boîtier au niveau de laquelle les canaux débouchent dans l'environnement,
**caractérisé en ce qu'**au moins un canal présente un îlot d'écoulement (26) comme élément de séparation hydrodynamique pour séparer au moins par endroits le canal en question en deux branches, et **en ce que** les deux branches sont ramenées à distance de la deuxième surface latérale.

**2.** Groupe propulseur selon la revendication 1, dans lequel les canaux sont conçus et agencés de telle sorte

- qu'ils partent de la turbine, à l'intérieur du boîtier, répartis sur le pourtour de la turbine - à un angle au pourtour de la turbine,
  et
- qu'ils débouchent dans l'environnement au niveau de la deuxième surface latérale, parallèlement les uns à côté des autres.

**3.** Groupe propulseur selon l'une des revendications 1 à 2, dans lequel la première surface latérale et la deuxième surface latérale sont agencées relativement inclinées l'une par rapport à l'autre, en particulier à angle droit l'une par rapport à l'autre.

**4.** Groupe propulseur selon l'une des revendications 1 à 3, dans lequel la deuxième surface latérale et l'axe de rotation sont agencés relativement inclinés l'un par rapport à l'autre, en particulier selon un angle compris entre 70 ° et 110 °, en particulier selon un angle de 90 °.

**5.** Groupe propulseur selon l'une des revendications 2 à 4, dans lequel une partie comprise entre 10 % et 40 %, en particulier une partie de 25 % des canaux extérieurs débouchant au niveau de la deuxième surface latérale présente un îlot d'écoulement.

**6.** Groupe propulseur selon l'une des revendications 1 à 5, dans lequel une première extrémité de la turbine, laquelle est agencée au niveau de l'ouverture sur la première surface latérale du boîtier, présente un diamètre inférieur à une deuxième extrémité de la turbine, au niveau du pourtour de laquelle les canaux, à l'intérieur du boîtier, partent de la turbine.

**7.** Groupe propulseur selon l'une des revendications 1 à 6, dans lequel le au moins un îlot d'écoulement - dans une vue de dessus le long de l'axe de rotation de la turbine - présente une forme semblable à une faucille.

**8.** Groupe propulseur selon l'une des revendications 1 à 7, dans lequel les canaux - dans une vue de dessus le long de l'axe de rotation de la turbine - présente une forme incurvée.

**9.** Groupe propulseur selon l'une des revendications 1 à 8, dans lequel chaque îlot d'écoulement est agencé au milieu entre deux parois d'un canal correspondant.

**10.** Procédé pour produire une poussée pour un groupe propulseur comprenant les étapes consistant à :

- introduire un courant massique de fluide à travers une ouverture d'un boîtier dans une turbine radiale, l'ouverture se trouvant au niveau d'une première surface latérale du boîtier et la turbine étant montée dans le boîtier de façon à pouvoir tourner autour d'un axe de rotation et étant entraînée par un moteur,
- procéder à une accélération radiale du courant massique de fluide à travers la turbine,
- introduire le courant massique de fluide dans les canaux qui sont agencés dans le boîtier et qui partent du pourtour de la turbine,
- diviser le courant massique de fluide dans au moins un des canaux, la division se faisant par endroits par un îlot d'écoulement agencé au milieu entre deux parois d'un canal correspondant comme élément de division hydrodynamique,
- créer une surpression au niveau d'une première surface latérale du au moins un îlot d'écoulement par écoulement de l'îlot d'écoulement avec le courant massique de fluide,
- créer une dépression au niveau d'une deuxième surface latérale du au moins un îlot d'écoulement par écoulement de l'îlot d'écoulement avec le courant massique de fluide,
- réunir le courant massique de fluide dans au moins un des canaux, la réunion se faisant à distance de la deuxième surface latérale,
- faire s'écouler le courant massique de fluide depuis les embouchures des canaux, les embouchures étant agencées parallèlement les unes à côté des autres sur la deuxième surface latérale du boîtier, en particulier dans un seul plan.

**11.** Procédé selon la revendication 10, dans lequel le au moins un îlot d'écoulement - dans une vue de dessus le long de l'axe de rotation de la turbine - présente une forme semblable à une faucille et/ou dans lequel chaque îlot d'écoulement est agencé au milieu entre deux parois d'un canal correspondant.

**12.** Procédé selon l'une des revendications 10 à 11, dans lequel la surpression et la dépression exercée au niveau d'un îlot d'écoulement correspondant entraînent une force qui agit transversalement à une direction longitudinale de l'îlot d'écoulement.

**13.** Procédé selon l'une des revendications 10 à 12, dans lequel une partie comprise entre 10 % et 40 %, en particulier de 25 % des canaux extérieurs débouchant au niveau de la deuxième surface latérale présente un îlot d'écoulement, et/ou dans lequel les canaux - dans une vue de dessus le long de l'axe de rotation de la turbine - présente une forme incurvée.

**14.** Procédé selon l'une des revendications 10 à 12, dans lequel le au moins un îlot d'écoulement - dans une vue de dessus le long de l'axe de rotation de la turbine - présente une forme semblable à une faucille et/ou dans lequel chaque îlot d'écoulement est agencé au milieu entre deux parois d'un canal correspondant.

**15.** Véhicule, en particulier avion, avec

- au moins deux groupes propulseurs selon l'une des revendications 1 à 9, lesquels sont agencés sur une surface de l'avion, en particulier dans lequel au moins un des groupes propulseurs est réalisé mobile autour d'au moins un axe au moyen d'au moins un moteur oscillant,
- une unité de commande pour commander individuellement et coordonner les groupes propulseurs, en particulier pour commander le au moins un moteur oscillant.

Fig. 1.1

$$F = \dot{m}(c - v) = 2000$$

$v = 250$

$\dot{m} = 10$

$c = 450$

Fig. 1.2

$$F_w = c_w \frac{\rho}{2} v^2 A_w$$

$F = \dot{m}(c - v)$

$F_w = F$

AP

$c = v$

Fig. 2.2

Fig. 2.3

Fig. 2.1

Fig. 3

$\sum F_{a.x}$

$F_{a1}$

$F_{a2}$

A

B

C

D

E

51

52

53

54

25

$c_{ein}$

Fig. 4.1

$F$

$v$

$c_{aus}$

$\dot{m}$

$c_{aus} < c_{ein}$

$c_{aus} < v$

$F$

$F_0$ (41)

$F_w = c_w \dfrac{\rho}{2} v^2 A_w$

$F_B = \dot{m}_B(c_B - v)$

$F_A = \dot{m}_A(c_A - v)$

$F$

$F_w = F$

Fig. 4.2

$F_{\Delta p}$

(45)

AP

(42) (43) (44)

$v = c_A$ \qquad $v > c_A$ \qquad $v = c_B$

$V$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 1879812 A

**In der Beschreibung aufgeführte Nicht-Patentliteratur**

- **FACHBUCH.** Flugzeugtriebwerke. Springer, 2009